# EUROPÄISCHE PATENTANMELDUNG

(11) **EP 0 603 434 A1**
(43) Veröffentlichungstag der Anmeldung: **29.06.1994**
(21) Anmeldenummer: 92250360.2
(22) Anmeldetag: 18.12.1992
(51) Int. Cl.: C08J 11/08, C08G 69/46

(54) **Polyamid-Rückgewinnung**

(71) Anmelder: KARL FISCHER INDUSTRIEANLAGEN GMBH, D-13509 Berlin (DE)
(72) Erfinder: Berthold, Hans, Dr.sc.techn., W-3320 Salzgitter 51 (DE); Hagen, Rainer, Dipl. Ing., W-1000 Berlin 28 (DE)
(74) Vertreter: Pfenning, Meinig & Partner

(57) **Zusammenfassung**

Es wird ein Verfahren zum Abtrennen und/oder Rückgewinnen von Polyamid (PA) aus Polyamid enthaltenden Produkten, Verbunden oder dergleichen vorgeschlagen. Dabei wird das PA durch ein geeignetes Lösungsmittel unter Ausschluß von chlorierten organischen Lösungsmitteln gelöst, der nicht gelöste Teil abgetrennt, das Polyamid durch geeignete Fällmittel ausgefällt und der entstandene Niederschlag aufgearbeitet.

## Beschreibung

Die Erfindung betrifft ein Verfahren zum Abtrennen und/oder zur Rückgewinnung von Polyamid aus Polyamid enthaltenden Produkten, Verbunden oder dergleichen.

Polyamid ist eines der am meisten verbreiteten Grundpolymere. Der bekannteste Vertreter des Polyamids, das Polyamid 6.6 (Nylon), ist hierbei ein wichtiger Grundstoff, der in zahlreichen Produkten verwendet wird. Polyamid 6 bzw. Polyamid 6.6 ist unter anderem in zahlreichen Geweben und Faserresten enthalten. Polyamid ist auch als Bestandteil in Folien und Formteilen mit anderen Kunststoffen, zum Beispiel Polypropylen, vorhanden. Ein besonderes Anwendungsfeld ist der Verbund von Polyamid mit anderen Polymeren in Teppichen.

Im Zuge der sich verschärfenden Umweltbestimmungen kommt deshalb der Abtrennung bzw. Rückgewinnung von Polyamid immer größere Bedeutung zu. Gefordert wird hierbei eine Abtrennung bzw. Rückgewinnung des Polyamids in einer solch reinen Form, daß es problemlos zu neuen Produkten verarbeitet werden kann. Gerade die Rückgewinnung von Kunststoffen in einer reinen Form stellt aber ein großes Problem dar und ist heute noch für die wenigsten Polymere gelöst.

Auch für Polyamid bzw. Polyamid 6.6 ist heute noch kein gängiges Verfahren bekannt, das es erlaubt, das Polyamid in einer so reinen Form zurückzugewinnen, daß es problemlos wieder für neue Produkte eingesetzt werden kann.

Wegen der Unmöglichkeit einer sauberen Trennung beschäftigen sich Neuentwicklungen lediglich mit dem Belassen des Polyamids im Gemisch und der Herstellung von minderwertigen Produkten, wie zum Beispiel dickwandigen Teilen aus diesem Gemisch, meist mit Polyethylen (z.B. Transportpaletten, Bauelemente für den Garten- und Landschaftsbau). Es ist zwar heute möglich, die schlechten Eigenschaften dieser Mischungen durch Zusatz von Legierungshilfsmitteln, sogenannten Compatibilizern, zu verbessern, die entstehenden Produkte sind aber trotzdem bisher nur dazu geeignet, um minderwertige Materialien herzustellen.

Nach den Verfahren des Standes der Technik können deshalb bisher weder Fasern noch dünnwandige Spritzgußartikel aus wiedergewonnenem Polyamid hergestellt werden.

Aus der DE 33 35 26 ist ein Verfahren zum Lösen und Ausfällen von Polycarbonaten bekannt. Danach wird Polycarbonat aus Lösungen in Chlorkohlenwasserstoffen unter Verwendung eines Fällmittels aus Chlorkohlenwasserstoffen ausgefällt. Dieses Verfahren hat aber den entscheidenden Nachteil, daß als Lösungsmittel Chlorkohlenwasserstoffe verwendet werden. Chlorkohlenwasserstoffe selbst sind toxisch und müssen wieder gesondert aufbereitet werden.

In summa ist deshalb festzustellen, daß aus dem bisherigen Stand der Technik kein Verfahren zur Rückgewinnung von Polyamid bekannt ist, das es erlaubt, das Polyamid in einer solch reinen Form zu erhalten, daß es problemlos zu neuen Produkten wie zum Beispiel Fasern oder dünnwandigen Spritzgußartikeln weiterverarbeitet werden kann. Gleichzeitig sind auf den verwandten Gebieten, wie zum Beispiel von Polycarbonaten, nur Verfahren bekannt, die mit toxischen Lösungsmitteln arbeiten und deshalb ebenfalls nicht geeignet sind.

Die Aufgabe der vorliegenden Erfindung ist es deshalb, ein neuartiges Verfahren vorzuschlagen, das es erlaubt, Polyamid aus polyamidhaltigen Produkten bzw. Verbunden zurückzugewinnen, wobei gefordert ist, daß das zurückgewonnene Polyamid eine solche Reinheit aufweisen muß, daß es problemlos zu neuen Produkten ohne Qualitätseinbuße verarbeitet werden kann.

Die Erfindung wird durch die kennzeichnenden Merkmale des Anspruchs 1 gelöst. Vorteilhafte Weiterbildungen sind in den Unteransprüchen 1 bis 10 angegeben.

Erfindungsgemäß wird danach das Polyamid enthaltende Produkt in einem speziellen Lösungsmittel gelöst. Es kommen hierbei alle Lösungsmittel in Frage, die für Polyamid bereits bekannt sind, außer chlorierte oder halogenierte Kohlenwasserstoffe. Gängige Lösungsmittel für Polyamid sind konzentrierte Mineralsäuren wie Ameisensäure oder Chloressigsäure, Phenole, Kresole, alkoholische Lösungen von Erdalkalihalogeniden oder aromatische Alkohole wie Phenylethylalkohol, Benzylalkohol oder auch Glykole, Lactame oder Lactone. Die Erfindung schließt selbstverständlich auch Mischungen dieser Lösungsmittel mit ein. Günstigerweise wird dabei so verfahren, daß bei den stärkeren Säuren eine erhöhte Temperatur vermieden wird, da das Polyamid oder auch das Lösungsmittel hydrolytisch abgebaut werden kann. Die entsprechenden Lösungsmittel werden deshalb nur mäßig erwärmt (ca. 25 bis 50° C).

Zum Lösevorgang wird dazu der Polyamid enthaltende Verbund bzw. das Polyamid enthaltende Produkt in einem vorstehend beschriebenen Lösungsmittel digeriert. Der dabei nicht gelöste Teil wird dann durch ein geeignetes Verfahren, zum Beispiel durch Filtrieren, vom gelösten Anteil abgetrennt. Nach einer bevorzugten Ausführungsvariante (Anspruch 4) besteht bei der Erfindung noch die Möglichkeit, diesen abgetrennten Teil gesondert aufzuarbeiten. Dazu wird der abgetrennte Teil noch mit Lösungsmittel und danach mit Wasser oder kurzkettigen aliphatischen Alkoholen gewaschen und getrocknet.

Die beim Verfahrensschritt b) erhaltene Lösung wird dann mit einem geeigneten Fällungsmittel behandelt, so daß das gelöste Polyamid in feinverteilter Form ausfällt. Als Fällungsmittel dienen hierzu alle gängigen Fällungsmittel, die für Polymere bekannt sind. Bevorzugt ist hierbei die Anwendung von verdünnten Säuren, wie zum Beispiel einer verdünnten Ameisensäure. Als weitere gängige Fällungsmittel können erfindungsgemäß Wasser, kurzkettige aliphatische Alkohole in reiner Form oder ein Gemisch mit dem jeweiligen oben erwähnten Lösungsmittel verwendet werden. Nach dem Ausfällen des Polyamids erfolgt dann mit den aus dem Stand der Technik bekannten Verfahren die Aufarbeitung des entstandenen Niederschlages.

Im Falle der Anwendung von heißen Lösungsmitteln ist es besonders günstig, wenn das Ausfällen des Niederschlages durch einfaches Abkühlen erfolgt (Anspruch 6). Dies hat den Vorteil, daß keine eigene Aufarbeitung des Fällungsmittels nötig ist. Die Form des Niederschlages kann dabei durch die Abkühlungsrate beeinflußt werden.

Nach der bevorzugten Ausführungsform nach Anspruch 6 wird dabei der entstehende Niederschlag abfiltriert und das erhaltene Produkt einer schonenden Trocknung unterzogen. Besonders günstig ist es hierbei, wenn die Trocknung im Vakuum oder unter Inertgas bei verminderter Temperatur durchgeführt wird. Dadurch wird nämlich gewährleistet, daß das entstandene Polyamid sich nicht mehr durch den Temperatureinfluß verändert. Als besonders günstig hat es sich hierbei erwiesen, wenn die Trocknung im Vakuum oder unter Inertgas bei einer Temperatur zwischen 40 und 80° C durchgeführt wird. Es hat sich gezeigt, daß es besonders vorteilhaft ist, wenn nach der Filtration der Filterkuchen noch mit Wasser säurefrei gewaschen wird und die Trocknung bei ca. 40° C im Vakuum vorgenommen wird.

Eine weitere bevorzugte Ausgestaltung der Erfindung schlägt vor, daß das nach dem Abfiltrieren des Polyamidniederschlages erhaltene Lösungsmittel weiter aufgearbeitet wird. Dazu wird eine Destillation vorgenommen und das Lösungsmittel vom Fällungsmittel abgetrennt. Mit dieser Maßnahme ist nun eine vollständige Rückführung aller beim Verfahren eingesetzten Stoffe möglich. Das Fällungsmittel wird zur erneuten Fällung wieder eingesetzt, und das Lösungsmittel wird zurückgeführt, um ebenfalls erneut verwendet zu werden.

Das erfindungsgemäße Verfahren ist dabei besonders geeignet zum Aufarbeiten von Abfallverbundteppichen aus Polyamid und Polypropylen. Bei der Anwendung des erfindungsgemäßen Verfahrens für diese polyamidhaltigen Produkte ist es dabei besonders günstig, daß auch das Polypropylen zurückerhalten werden kann (Verfahrensschritt b)). Weiterhin günstig ist die Anwendung des Verfahrens für verschmutzte polyamidhaltige Post-Consumer-Abfällen.

Wie in den Versuchen gezeigt wurde, kann mit dem erfindungsgemäßen Verfahren ein Polyamid zurückgewonnen werden, das Eigenschaften aufweist, die mit denen von reinem Polyamid vergleichbar sind. Somit steht erstmals ein Verfahren zur Abtrennung bzw. Zurückgewinnung von Polyamid zur Verfügung, das ein Polyamid liefert, das in seiner Reinheit mit der des Ausgangsproduktes nahezu identisch ist.

Die Erfindung wird anhand eines Ausführungsbeispieles näher erläutert.

### Beispiel 1:

200 g eines Teppich-Fasergewölles, bestehend aus 80 Gew.% PA-6-Faserflor und 20 Gew.% PP-Bändchen wurden in 2,5 l Lösungsmittel (85 %ige Ameisensäure) bei 40° C über 30 min digeriert. Das zurückbleibende Fasergewölle wurde abgetrennt, mit Lösungsmittel und danach mit Wasser gewaschen und getrocknet. Es verblieben 41 g Rückstand, welcher aus faserigem PP bestand. Die Lösung wurde nach 15 min mit der 1,5-fachen Vol.-Menge Fällmittel (verdünnte Ameisensäure) vesehen und langsam gerührt. Nach 15 min wurde die Suspension vom Fällmittel abfiltriert. Der Filterkuchen wurde mit Wasser säurefrei gewaschen und bei 40° C im Vakuum getrocknet.

Das erhaltene Pulver aus dem Filterkuchen hatte folgende Eigenschaften:
1. Die Korngröße betrug 4 µm bis 70 µm bei einem Mittelwert von 20 µm.
2. Im DSC-Diagramm des Pulvers sind zwei Schmelzpunkte zu erkennen. Der eine liegt bei 225° C und kann dem Polyamid 6 zugeordnet werden, der andere liegt bei 261° C und entspricht dem des Polyamids 6.6.
3. Die relative Lösungsviskosität, gemessen in 96%iger Schwefelsäure bei 25° C und einer PA-Konzentration von 1 g/dl, ist ein Maß für die Kettenlänge von Polyamid 6 und 6.6. Im PA-Anteil der Faserabfälle liegt dieser Wert bei 2,58, im zurückgewonnenen PA-Pulver bei 2,32.

### Beispiel 2:

Zerkleinerte Formteile aus PA 12 mit 30 % Glasfaseranteil, mit Pigmentfarbstoffen unterschiedlich gefärbt, wurden mit Caprolactam bei 180° C gelöst. Die Lösezeit betrug 30 min. Die ungelösten Anteile wurden durch Filtrieren bei 180° C von der Lösung abgetrennt, abgekühlt und mit Wasser lactamfrei gewaschen. Aus der heißen Lösung wurde PA 12 durch Abkühlen auf 85° C gefällt, bei derselben Temperatur abfiltriert und mit flüssigem Lactam gewaschen. Nach Abkühlen wurde der Filterkuchen mit Wasser lactamfrei gewaschen und bei 40° C im Vakuum getrocknet. Das entstandene Pulver war frei von Glasfaseranteilen und zeigte nur noch einen grauen Farbstich.

## Patentansprüche

1. Verfahren zum Abtrennen und/oder Rückgewinnen von Polyamid (PA) aus Polyamid enthaltenden Produkten, Verbunden oder dergleichen,
**gekennzeichnet durch**
die folgenden Merkmale:
a) Lösen des PA durch ein geeignetes Lösungsmittel unter Ausschluß von chlorierten organischen Lösungsmitteln,
b) Abtrennen des nicht gelösten Teiles,
c) Ausfällen des Polyamids durch geeignete Fällmittel,
d) Aufarbeitung des entstandenen Niederschlages.

2. Verfahren nach Anspruch 1, dadurch gekennzeichnet, daß das Lösungsmittel ausgewählt ist aus der Gruppe von konzentrierten Mineralsäuren, Phenolen, Kresolen, alkoholischen Lösungen von Erdalkalihalogeniden, aromatischen Alkoholen, Glykolen, Lactame oder Lactone oder einer Mischung davon.

3. Verfahren nach Anspruch 2, dadurch gekennzeichnet, daß das Lösungsmittel Ameisensäure ist.

4. Verfahren nach Anspruch 1 bis 3, dadurch gekennzeichnet, daß als Fällungsmittel Wasser oder kurzkettige aliphatische Alkohole in reiner Form oder im Gemisch mit den Lösungsmitteln aus Anspruch 2 verwendet werden.

5. Verfahren nach Anspruch 1 bis 4, dadurch gekennzeichnet, daß der im Verfahrensschritt b) abgetrennte Teil gesondert aufgearbeitet wird.

6. Verfahren nach Anspruch 1 bis 5, dadurch gekennzeichnet, daß das Ausfällen des Polyamids (Verfahrensschritt c)) im Falle von heißen Lösungsmitteln durch Abkühlen der heißen Lösung erfolgt.

7. Verfahren nach Anspruch 1 bis 6, dadurch gekennzeichnet, daß zur Aufarbeitung des Polyamids der entstandene Niederschlag abfiltriert, mit dem Fällungsmittel gewaschen und das Lösungsmittel zurückgewonnen wird, und daß das Filtrat einer schonenden Trocknung im Vakuum oder unter Inertgas unterzogen wird.

8. Verfahren nach Anspruch 7, dadurch gekennzeichnet, daß die Trocknung im Vakuum oder unter Inertgas bei 50 bis 80° C vorgenommen wird.

9. Verfahren nach Anspruch 1 bis 8 zur Aufarbeitung von Abfallverbundteppichen aus Polyamid und Polypropylen.

10. Verfahren nach Anspruch 1 bis 8 zur Aufbereitung von verschmutzten polyamidhaltigen Post-Consumer-Abfällen.
